# EUROPEAN PATENT SPECIFICATION

(11) **EP 2 406 300 B1**
(45) Date of publication and mention of the grant of the patent: **16.11.2016**
(21) Application number: 10751241.0
(22) Date of filing: 08.03.2010
(51) Int. Cl.: C08G 69/10, C08G 69/00, C08G 69/48

(54) **METHOD FOR THE PRODUCTION OF POLYAMINO ACID RANDOM COPOLYMERS**
VERFAHREN ZUR HERSTELLUNG VON STATISTISCHEN POLYAMINSÄURE-COPOLYMEREN
PROCÉDÉ DE PRODUCTION DE COPOLYMÈRES ALÉATOIRES DE POLYAMINO ACIDES

(30) Priority: 10.03.2009 US 158883 P
(43) Date of publication of application: 18.01.2012
(73) Proprietor: Sigma-Aldrich Co. LLC, St. Louis, MO 63103 (US)
(72) Inventor: PONNUSAMY, Ettigounder, St. Louis Missouri 63118 (US)
(74) Representative: Brewster, Andrea Ruth
(86) International application number: PCT/US2010/026520
(87) International publication number: WO 2010/104789

(56) References cited:
- WO-A1-00/52078
- US-A1- 2008 125 581
- US-B1- 7 317 070

## Description

### FIELD OF THE INVENTION

The invention provides a method for the production of polyamino acid copolymers.

### BACKGROUND OF THE INVENTION

Polyamino acid copolymers have a wide variety of properties that mimic proteins, including increasing solubility and stability of drug attachments, drug encapsulation, drug targeting, bypassing multidrug resistance (MDR) factors, minimal stimulation of the immune system, low toxicity, and biodegradability. These properties make polyamino acid copolymers ideal for delivery of drugs and nucleic acids *in vitro* and *in vivo.*

Polyamino acid copolymers containing tyrosine and glutamic acid, aspartic acid or both, are of special interest. However, current methods for their commercial manufacture are hazardous, time consuming, and produce generally low quality fragmented copolymers. Manufacture of poly (L-glutamic acid sodium, L-tyrosine) copolymers has traditionally required the use of benzyl-protected L-glutamate and CBZ-protected L-tyrosine as starting material. Removal of benzyl and CBZ groups from the resulting poly (γ-benzyl-L-glutamic acid, O-CBZ-L-Tyrosine) protected copolymer requires the handling of hazardous chemicals (HBr/acetic acid) and highly flammable solvents such as acetone. This limits the scale of operation, as a relatively large volume of flammable waste is generated. Also, benzyl bromide, a very strong lachrymator, is generated as a hazardous byproduct. In addition, to remove the,benzyl group completely from the polymer, the process needs to be repeated, which in turn hydrolyzes the polymer chain to smaller, lower quality, copolymer chains. Therefore, a need exists for an efficient and safe process for the manufacture of high quality polyamino acid copolymers containing alanine, or tyrosine or both and glutamate, aspartate or both.

WO 00/52078 describes methods of combining chemical compounds with synthetic amino acid polymers for protection from degradation and to provide for controlled release of the compounds.

US 7317070 describes a process for the preparation of polyamino acids generally and more specifically polyglutamic acid and polyaspartic acid.

### SUMMARY OF THE INVENTION

Briefly, therefore, the present invention provides an efficient method for the synthesis of high quality polyamino acid copolymers. In one aspect, the invention encompasses a method for the production of a polyamino acid random copolymer. In this iteration of the invention, the method comprises:
(a) polymerizing a mixture comprising at least one N-carboxyanhydride comprising Formula (I) and at least one N-carboxyanhydride comprising Formula (II) in the presence of a polymerization initiator, wherein the molar ratio of N-carboxyanhydrides comprising Formula (I) and (II) to polymerization initiator is from 31:1 to 50:1, to form a random copolymer comprising a repeat unit comprising Formula (Ia) and a repeat unit comprising Formula (IIa);
   wherein:
   the N-carboxyanhydride comprising Formula (I) corresponds to the following structure: 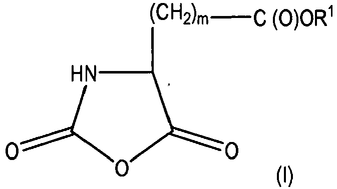
   the N-carboxyanhydride comprising Formula (II) corresponds to the following structure: 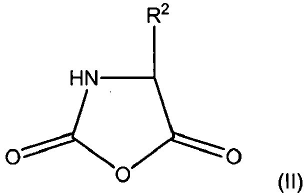
   the repeat unit comprising Formula (Ia) corresponds to the following structure: 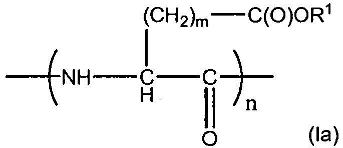
   the repeat unit comprising Formula (IIa) corresponds to the following structure: 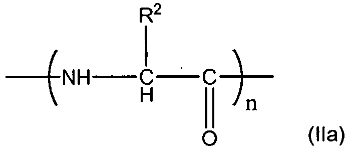
(b) hydrolyzing R¹ from the repeat unit comprising Formula (Ia) in the presence of a base to form the polyamino acid random copolymer comprising repeat units corresponding to Formula (IIa) and (Ib), the repeat unit comprising Formula (Ib) corresponding to the following structure: 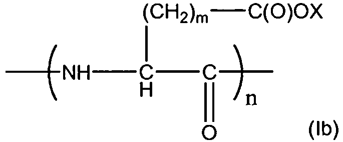 wherein:
   R¹ is an alkyl;
   R² is selected from the group consisting of {-}CH₂CH(CH₃)₂; {-}CH₃; {-}CH(CH₃)₂; {-}(CH₂)₃; {-}H; {-}CH₂OH; {-}CH₂C(O)NH₂; {-}(CH₂)₂C(O)NH₂; {-}(CH₂)₂SCH₃; {-}(CH₂)indolyl; {-}(CH₂)benzyl; {-}(CHCH₃)CH₂CH₃; {-}(CH)OHCH₃; {-}(CH₂)SH; {-}(CH₂)C₆H₄OH; {-}(CH₂)C₃N₂H₄; {-}(CH₂)₄NH₃⁺; and {-}(CH₂)₃NHC(N⁺H₂)NH₂;
   X is hydrogen or an alkali metal
   m is 1 or 2; and
   n is an integer.

In another iteration, the invention encompasses a method for the production of a polyamino acid random copolymer of tyrosine and either glutamate or aspartate. In this embodiment, the method comprises:
(a) polymerizing a mixture comprising at least one N-carboxyanhydride comprising Formula (I) and at least one N-carboxyanhydride of tyrosine comprising Formula (III) in the presence of a polymerization initiator, wherein the molar ratio of N-carboxyanhydrides comprising Formula (I) and (III) to polymerization initiator is from 31:1 to 50:1, to form a random copolymer comprising a repeat unit comprising Formula (Ia) and a repeat unit comprising Formula (IIIa);
   wherein:
   the N-carboxyanhydride comprising Formula (I) corresponds to the following structure: 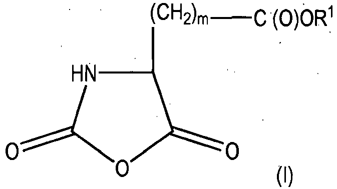
   the N-carboxyanhydride comprising Formula (III) corresponds to the following structure: 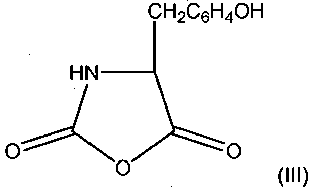
   the repeat unit comprising Formula (Ia) corresponds to the following structure: 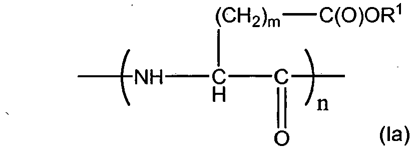
   the repeat unit comprising Formula (IIIa) corresponds to the following structure: 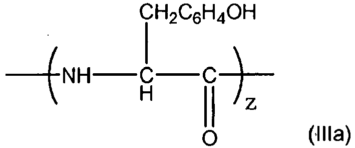
(b) hydrolyzing R¹ from the repeat unit comprising Formula (Ia) in the presence of a base to form the polyamino acid random copolymer comprising repeat units corresponding to Formula (IIIa) and (Ib), the repeat unit comprising Formula (Ib) corresponding to the following structure: 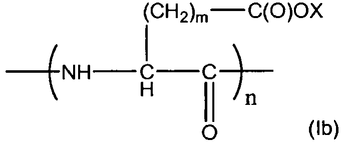 wherein:
   R¹ is an alkyl;
   X is hydrogen or an alkali metal
   m is 1 or 2; and
   n is an integer.

Other aspects and iterations of the invention are described more thoroughly below.

### DETAILED DESCRIPTION OF THE INVENTION

A method for the production of polyamino acid copolymers has been developed. The method generally applies green chemistry principles, is more efficient, requires less production time, and is more cost effective compared to current methods described in the art. Advantageously, as illustrated in the examples, the method may be utilized to synthesize polyamino acid copolymers without the use of protecting groups (e.g., benzyl-protecting groups or CBZ-protecting groups) that must be removed by repeated rounds of treatment with harsh chemicals, which in turn hydrolyzes the polymer chain to smaller, lower quality, copolymer chains. As such, the polyamino acid copolymers produced by the method of the invention generally are higher in quality with less fragmentation compared to copolymers produced with the aforementioned protecting groups.

### (I) Preparation of a polymerization reaction mixture

The method of the invention generally commences via the formation of a polymerization mixture. The polymerization mixture will comprise an N-carboxyanhydride of a first amino acid, an N-carboxyanhydride of a second amino acid, and a polymerization initiator. In additional embodiments, the polymerization mixture may comprise N-carboxyanhydrides of two, three, or four or more additional amino acids, as described in more detail below. The amino acids may be D- or L-amino acid optical isomers. Alternatively, the amino acids may be a mixture of D- and L-amino acid optical isomers. In a preferred embodiment, the amino acids are L-amino acid optical isomers. The resulting polyamino acid is typically a random copolymer. In an exemplary iteration of the invention, the polyamino acid comprises a random copolymer of either glutamic acid or aspartic acid and tyrosine or alanine or both.

N-carboxyanhydrides of amino acids (i.e., NCAs) may be prepared in accordance with methods generally known in the art, as described in detail in Goodman and Peggion, Pure and Applied Chemistry, volume 53, p. 699, 1981, which is incorporated herein by reference in its entirety. Briefly, the amino acid may be treated with phosgene in an ethereal solvent such as tetrahydrofuran, to produce the corresponding NCA, as described in U.S. Patent No. 7,294,719, which is hereby incorporated by reference in its entirety. By way of non-limiting example, the preparation of N-carboxyanhydrides of alkylglutamates and alkylaspartates is known and described, for example, in U.S. Pat. Nos. 6,479,665 and 6,603,016, which are hereby incorporated by reference in their entirety. Generally speaking, the alkylglutamate or alkylaspartate is treated with phosgene in an ethereal solvent (e.g., tetrahydrofuran) to produce the corresponding alkylglutamate, N-carboxyanhydride or alkylaspartate, N-carboxyanhydride.

In one aspect of the invention, polyamino acid copolymers may be prepared from a reaction mixture comprising at least one NCA comprising Formula (I) and at least one NCA comprising Formula (II) in the presence of a polymerization initiator, wherein the molar ratio of N-carboxyanhydrides comprising Formula (I) and (II) to polymerization initiator is from 31:1 to 50:1. The NCA comprising Formula (I) may be an alkylglutamate or alkylaspartate corresponding to the following structure: 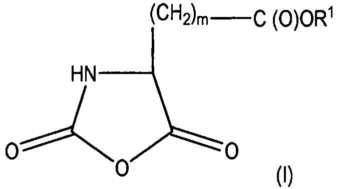 and the NCA comprising Formula (II) may correspond to the following structure: 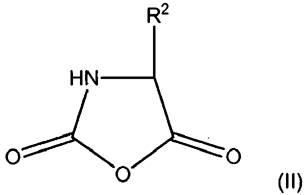 wherein:
R¹ is an alkyl;
R² is selected from the group consisting of {-}CH₂CH(CH₃)₂, {-}CH₃, {-}CH(CH₃)₂, {-}(CH₂)₃, {-}H, {-}CH₂OH, {-}CH₂C(O)NH₂, {-}(CH₂)₂C(O)NH₂, {-}(CH₂)₂SCH₃, {-}(CH₂)indolyl, {-}(CH₂)benzyl, {-}(CHCH₃)CH₂CH₃, {-}(CH)OHCH₃, {-}(CH₂)SH, {-}(CH₂)C₆H₄OH, {-}(CH₂)C₃N₂H₄, {-}(CH₂)₄NH₃⁺ and {-}(CH₂)₃NHC(N⁺H₂)NH₂; and
m is 1 or 2.

In one alternative of this aspect, the reaction mixture may contain one NCA comprising Formula (I) and one NCA comprising Formula (II). In another alternative of this aspect, the reaction mixture may contain one NCA comprising Formula (I) and two NCAs comprising Formula (II). In yet another alternative of this aspect, the reaction mixture may contain one NCAs comprising Formula (I) and three or more NCAs comprising Formula (II). In still another alternative of this aspect, the reaction mixture may contain two NCAs comprising Formula (I) and one NCA comprising Formula (II). In an additional alternative of this aspect, the reaction mixture may contain two NCAs comprising Formula (I) and two NCAs comprising Formula (II). In yet another alternative of this aspect, the reaction mixture may contain two NCAs comprising Formula (I) and three or more NCAs comprising Formula (II).

In some embodiments for compounds comprising Formula (I), R¹ may be a lower alkyl group containing from one to eight carbon atoms in the principle chain, and up to 20 carbon atoms. In some alternatives of this embodiment, the alkyl group may be straight or branched chain or cyclic. In some embodiments, R¹ may be methyl, ethyl, n-propyl, isopropyl, n-butyl, isobutyl, tert-butyl, straight pentyl and branched pentyl. In a preferred embodiment for compounds comprising Formula (I), R¹ is selected from the group consisting of methyl and ethyl. In an exemplary embodiment for compounds comprising Formula (I), R¹ is an ethyl.

In an exemplary embodiment when m is 1, the compound comprising Formula (I) corresponds to the following structure:

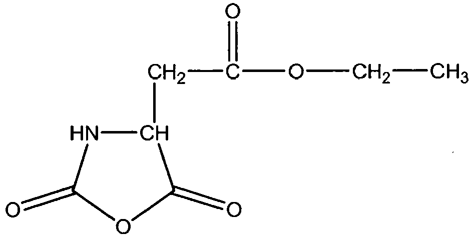

In yet another exemplary embodiment, when m is 2, the compound comprising Formula (I) corresponds to the following structure:

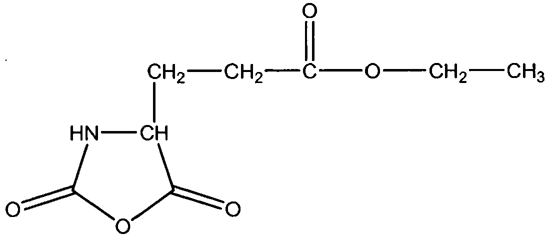

In exemplary iterations for compounds comprising Formula (II), R² is {-}CH₃ for alanine NCA. In another exemplary embodiment for compounds comprising Formula (II), R² is {-}(CH₂)C₆H₄OH for tyrosine NCA and corresponds to Formula (III):

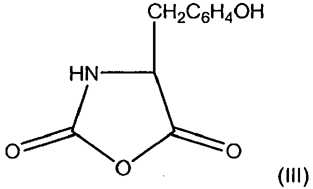

As would be appreciated by a skilled artisan, side groups of some amino acids may be protected during synthesis of polyamino acid copolymer. As such, for the compounds comprising Formula (II), R² may or may not need a protecting group. In some embodiments, R² may need a protecting group. In preferred embodiments, R² may not need a protecting group. In an exemplary embodiment, when the compound is tyrosine NCA, the side group R² (i.e., {-}(CH₂)C₆H₄OH) is not protected.

In one exemplary aspect of the invention, polyamino acid copolymers of the present invention may be prepared from a reaction mixture comprising at least one NCA comprising Formula (I) and at least one NCA of tyrosine comprising Formula (III). In one alternative of this aspect, the reaction mixture may contain one NCA comprising Formula (I). In another alternative of this aspect, the reaction mixture may contain two NCAs comprising Formula (I). For each of the foregoing embodiments, the NCA comprising Formula (I) may be an alkyl-L-glutamate NCA.

As will be appreciated by a skilled artisan, the molar ratio of the various NCAs in the reaction mixture will directly influence the molar ratio of each amino acid in the resulting polyamino acid copolymer. Generally speaking, the molar ratio of NCA comprising Formula (I) to NCA comprising Formula (II) or (III) may be about 1:1 to about 5:1. By way of example, a 4:1 molar ratio of glutamic acid NCA to tyrosine NCA, will produce a copolymer with a 4:1 molar ratio of glutamic acid to tyrosine. As such, it is understood that the ratio of various NCAs can and will vary without departing from the scope of the invention.

The polymerization initiator of the reaction mixture is a nucleophile. The choice of nucleophile can and will vary. In some embodiments, the nucleophile is selected from the group consisting of amines and metal alkoxides. In some embodiments, the nucleophile is an amine. In one embodiment, the nucleophile is a primary amine. In another embodiment, the nucleophile is a secondary amine. In yet another embodiment, the nucleophile is a tertiary amine. Suitable examples of amine nucleophiles include diethylamine, triethylamine, hexylamine, phenylamine, ethylamine, N,N-diisopropylamine, and N,N-dicyclohexylamine. In other embodiments, the nucleophile is a metal alkoxide. Suitable examples of metal alkoxides include metal alkoxides having the formula MOR wherein, M is a metal and R is an alkyl group. In some alternatives of the embodiment, the metal of the metal alkoxide may be sodium or potassium, and the alkyl moiety may be a linear, branched or cyclic alkyl group having 1 to 10 carbon atoms. Suitable examples of metal oxide polymerization initiators include sodium methoxide, sodium ethoxide, sodium propoxide or combinations thereof. In an exemplary embodiment, the metal alkoxide polymerization initiator is sodium methoxide.

The molar ratio of the NCAs comprising Formula (I) and (II) or (III) to polymerization initiator used to form the polymerization reaction mixture is from 31:1 to 50:1. Generally speaking, the molar ratio of NCAs to polymerization initiator may be used as one means to control the size of the resulting copolymer. As the molar ratio of the NCAs to the polymerization initiator is decreased the molecular weight of the copolymer decreases. Conversely, as the molar ratio of the NCAs to the polymerization initiator is increased the molecular weight of the copolymer generally increases. The molar ratio of the NCAs comprising Formula I and II or III to polymerization initiator is from 31:1 to 50:1.

The polymerization reaction is generally conducted in the presence of a solvent. Suitable solvents include dioxane, chloroform, dichloromethane, acetonitrile, and combinations thereof.

### (II) Polymerization

Polymerization of the NCAs may be carried out over a range of temperatures and times without departing from the scope of the invention. By way of non-limiting example, polymerization may be carried out for a period of about 12 to about 30 hours, more typically about 18 hours to 24 hours, at a temperature of about 20°C to about 40°C, more typically about 25°C to about 30°C.

In one aspect of the invention, the resulting copolymer will contain the repeat unit comprising Formula (Ia), and the repeat unit comprising Formula (IIa), wherein, the repeat unit comprising Formula (Ia) corresponds to the following structure: 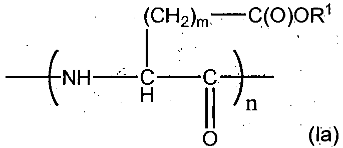 the repeat unit comprising Formula (IIa) corresponds to the following structure: 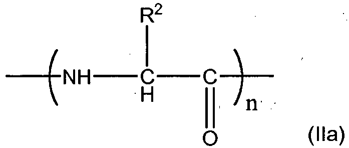 wherein, R¹, R², and m are as described above, and n is an integer.

In another aspect of the invention, the resulting copolymer will contain the repeat unit comprising Formula (Ia), and the repeat unit comprising formula (IIIa), wherein, the repeat unit comprising Formula (Ia) corresponds to the following structure: 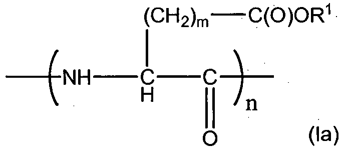 the repeat unit comprising Formula (IIIa) corresponds to the following structure: 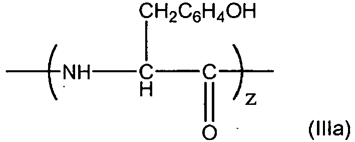 wherein, R¹, m and n are as described above.

In one exemplary embodiment, the compound comprising Formula (Ia) comprises the following structure:

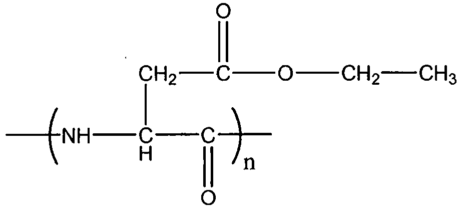

In another exemplary embodiment, the compound comprising Formula (Ia) comprises the following structure:

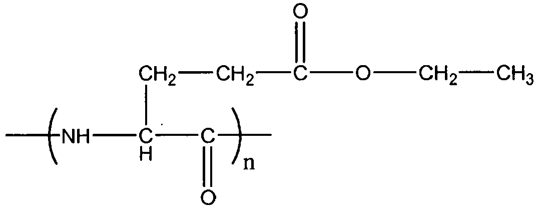

In general, n can and will vary over a wide range, as n is influenced among other factors by the molar ratio of the NCAs to the polymerization initiator used to form the polymerization reaction mixture as described in section (I). In some embodiments, n is about 10 to about 1000, and the polyamino acid copolymer has a mass-average molecular weight of 2500 to about 150,000. In one embodiment, n is about 20 to about 750, and the polyamino acid copolymer has a mass-average molecular weight of about 5000 to about 100,000. In an exemplary embodiment, n is about 130 to about 325, and the polyamino acid copolymer has a mass-average molecular weight of about 20,000 to about 50,000.

Upon completion of polymerization, the polyamino acid copolymer is preferably precipitated in water and filtered using methods known in the art.

### (III) Hydrolysis

The R¹ group from the repeat unit comprising Formula (Ia) may be hydrolyzed in the presence of a base. In one aspect of the invention, hydrolyzing R¹ from the repeat unit comprising Formula (Ia) in the presence of a base forms the polyamino acid random copolymer comprising repeat units corresponding to Formula (IIa) and (Ib), the repeat unit comprising Formula (Ib) corresponding to the following structure: 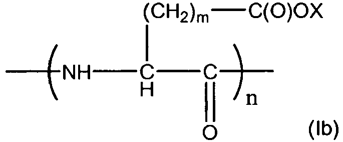 wherein: X is hydrogen or an alkali metal and, (Ia), (IIa), m and n are as described above in sections (I) and (II).

In another aspect of the invention, hydrolyzing R¹ from the repeat unit comprising Formula (Ia) in the presence of a base forms the polyamino acid random copolymer comprising repeat units corresponding to Formula (IIIa) and (Ib), wherein compounds comprising Formula (Ia) and (IIIa) are as described above.

In an exemplary embodiment, the compound comprising Formula (Ib) comprises the following structure:

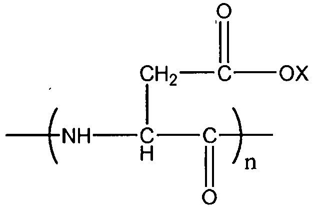

In an exemplary embodiment, the compound comprising Formula (Ib) comprises the following structure:

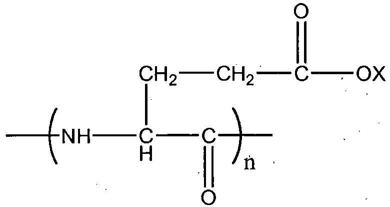

In some embodiments, the hydrolysis reaction is carried out in the presence of a strong base. Suitable strong bases include potassium hydroxide, barium hydroxide, cesium hydroxide, sodium hydroxide, strontium hydroxide, calcium hydroxide, lithium hydroxide, and rubidium hydroxide. In preferred embodiments, the hydrolysis reaction is carried out in the presence of a strong base selected from the group consisting of sodium hydroxide, potassium hydroxide, rubidium hydroxide, and combinations thereof. In an exemplary embodiment, the hydrolysis reaction is carried out in the presence of sodium hydroxide.

The hydrolysis reaction is typically conducted in the presence of a solvent. Suitable solvents typically include a protic solvent. Suitable examples of protic solvents include, but are not limited to, methanol, ethanol, isopropanol, n-propanol, isobutanol, n-butanol, s-butanol, t-butanol, formic acid, acetic acid, water, and combinations thereof. In an exemplary alternative of the embodiment, the solvent used for the hydrolysis reaction is ethanol.

The hydrolysis reaction may be carried out over a range of temperatures and times without departing from the scope of the invention. By way of non-limiting example, hydrolysis may be carried out for a period of about 0.5 to about 10 hours, more typically about 1 hour to 4 hours, at a temperature ranging from about 15°C to about 30°C.

After hydrolysis, the product may be diluted with water, dialyzed or subjected to ultrafiltration and lyophilized to yield the polyamino acid copolymer. The copolymer may be analyzed by proton nuclear magnetic resonance (NMR), and the molecular weight determined by gel permeation chromatography multi-angle laser light scattering (GPC MALLS).

### EXAMPLES

The following examples detail the synthesis of various polyamino acid copolymers. Examples 1-3 describe three preps of Poly(Glu, Tyr) 4:1, Sodium polyamino acid copolymers and Examples 4-6 describe three preps of Poly(Glu, Ala, Tyr) 6:3:1, Sodium polyamino acid copolymers.

### Example 1. Synthesis of Poly(Glu, Tyr) 4:1, Sodium

The following synthesis specifies the synthesis of poly (Glu, Tyr) using N-carboxyanhydrides of γ-Ethyl-L-Glutamic acid and L-Tyrosine. The N-carboxyanhydrides of γ-Ethyl-L-Glutamic acid and L-Tyrosine were synthesized using techniques given in detail in the review article by M. Goodman and E. Peggion, Pure and Applied Chemistry, volume 53, p. 699, 1981 and the book by H. R. Kricheldorf "Alpha amino acids-N-Carboxyanhydrides and Related Heterocycles", Springer Verlag (1987) and the recent publications by Wendelmoed N. E. van Dijk-Wolthuis et al, Macromol. Chem. Phys. Volume 198, p. 3893 - 3906, 1997.

*Polymerization*: 6.423g (0.032 mole) of γ-Ethyl-L-Glutamic acid NCA and 1.656g (0.008 mole) of L-Tyrosine NCA were dissolved in 0.2 liter of 1,4-dioxane to make a 0.2M solution. To this was added ∼1.2g of charcoal and the slurry was filtered to yield a clear colorless solution. The filtered NCA solution was transferred to a 1 liter three neck RB flask equipped with mechanical mixing and a water bath at a temperature of 25 - 30°C. 1.33 ml of 1 N sodium methoxide (0.0013 moles) was placed in 10 ml of 1,4-dioxane. The sodium methoxide solution was added to the NCA solution in one portion with vigorous mixing. The polymerization solution was mixed for 2 hours and held at 25 - 30°C for 18 - 24 hours.

*Precipitation of Protected Polymer.* The polymer solution was slowly poured in ∼400ml of DI-water with vigorous mixing, upon which the protected polymer precipitated. The mixture was mixed for 30 minutes, filtered, and the polymer was washed with 2x100ml of DI-water. The protected polymer, unlike processes detailed in the prior art, was not dried. This is advantageous because it significantly decreases the amount of time required to synthesize the copolymer, and as a result, the invention provides a process that is more efficient and cost-effective.

*Deprotection of Ethyl group*: The wet polymer was transferred to a 250ml Erlenmeyer flask. To this was added 80ml of 1.5M ethanolic sodium hydroxide and mixed for 2 hours. The polymer solution was diluted with ∼150ml of DI-water and mixed for 5 minutes, which formed a clear solution.

*Dialysis*/*ultra-filtration and lyophilization (freeze drying)*: The poly(Glu, Tyr) 4:1, Sodium solution was dialyzed/ultra-filtered against running deionized water using ∼12K molecular weight cut off dialysis tubings/5K membrane to remove the oligomers and salts. The dialyzed/ultra-filtered solution was collected, filtered through a 0.2-micron filter and lyophilized (freeze dried) to get the solid poly(Glu, Tyr) 4:1, Sodium polymer.

Yield: 58.6%. Proton NMR showed the complete removal of the ethyl group (absence of ethyl peak). Measured intrinsic viscosity in 0.2 Molar sodium chloride solution (pH ∼7.3) at 25°C and calculated the viscosity molecular weight (31,800). Additional analyses included determination of the GPC MALLS molecular weight (21,000), optical rotation (-60.1°), and amino acid analysis (Glu: 4 and Tyr: 1).

### Example 2. Synthesis of Poly(Glu, Tyr) 4:1, Sodium

*Polymerization:* 19.27g (0.096 mole) of γ-Ethyl-L-Glutamic acid NCA and 4.968g (0.024 mole) of L-Tyrosine NCA were dissolved in 0.6 liter of 1,4-dioxane to make a 0.2M solution. To this was added ∼3.75g of charcoal and the slurry was filtered to yield a clear colorless solution. The filtered NCA solution was transferred to a 2 liter three neck RB flask equipped with mechanical mixing and a water bath at a temperature of 25 - 30°C. 3.43 ml of 1 N sodium methoxide (0.00343 moles) was placed in 10 ml of 1,4-dioxane. The sodium methoxide solution was added to the NCA solution in one portion with vigorous mixing. The polymerization solution was mixed for 2 hours and held at 25 - 30°C for 18 - 24 hours.

*Precipitation of Protected Polymer*: The polymer solution was slowly poured in ∼1,500ml of DI-water with vigorous mixing. The protected polymer precipitated, The slurry was mixed for 30 minutes, filtered, and the polymer was washed was not dried.

*Deprotection of Ethyl group*: The wet polymer was transferred to a 1,000ml Erlenmeyer flask. To this was added 240ml of 1.5M ethanolic sodium hydroxide and mixed for 2 hours. The polymer solution was diluted with ∼450ml of DI-water and mixed for 5 minutes, which formed a clear solution.

*Dialysis*/*ultra-filtration and lyophilization (freeze drying)*: The poly(Glu, Tyr) 4:1, Sodium solution was dialyzed/ultra-filtered against running deionized water using ∼12K molecular weight cut off dialysis tubings/5K membrane to remove the oligomers and salts. The dialyzed/ultra-filtered solution was collected, filtered through a 0.2-micron filter and lyophilized (freeze dried) to get the solid poly(Glu, Tyr) 4:1, Sodium polymer.

*Yield:* 65.5%. Proton NMR showed the complete removal of the ethyl group (absence of ethyl peak). Measured intrinsic viscosity in 0.2 Molar sodium chloride solution (pH ∼7.3) at 25°C and calculated the viscosity molecular weight (22,300). Also measured GPC MALLS molecular weight (17,190), optical rotation (-40.9°), and amino acid analysis (Glu: 4 and Tyr: 1).

### Example 3. Synthesis of Poly(Glu, Tyr) 4:1, Sodium.

*Polymerization*: 96.48g (0.480 mole) of γ-Ethyl-L-Glutamic acid NCA and 24.84g (0.120 mole) of L-Tyrosine NCA were dissolved in 3 liter of 1,4-dioxane to make a 0.2M solution. Added ∼18g of charcoal and filtered to yield a clear colorless solution. The filtered NCA solution was transferred to a 5 liter three neck RB flask equipped with mechanical mixing and a water bath at a temperature of 25 - 30°C. 12 ml of 1N sodium methoxide (0.012 moles) was placed in 100 ml of 1,4-dioxane. The sodium methoxide solution was added to the NCA solution in one portion with vigorous mixing. The polymerization solution was mixed for 2 hours and held at 25 - 30°C for 18 - 24 hours.

*Precipitation of Protected Polymer*: Slowly poured the polymer solution in ∼6,000ml of DI-water with vigorous mixing. Protected polymer precipitated, mixed for 30 minutes and filtered. Washed the filtered polymer with 2x1,000ml of DI-water. The protected polymer, unlike processes detailed in the prior art, is not dried. This is advantageous because it significantly decreases the amount of time required to synthesize the copolymer, and as a result, the invention provides a process that is more efficient and cost-effective.

*Deprotection of Ethyl group*: Transferred the wet polymer to a 5 liter three neck RB flask and provided mechanical mixing. Added 1,200ml of 1.5M ethanolic sodium hydroxide and mixed for 2 hours. Diluted the polymer solution with ∼2,400ml of DI-water and mixed for 5 minutes, which formed a clear solution.

*Dialysis*/*ultra-filtration and lyophilization (freeze drying)*: The poly(Glu, Tyr) 4:1, Sodium solution was dialyzed/ultra-filtered against running deionized water using ∼12K molecular weight cut off dialysis tubings/5K membrane to remove the oligomers and salts. The dialyzed/ultra-filtered solution was collected, filtered through a 0.2-micron filter and lyophilized (freeze dried) to get the solid poly(Glu, Tyr) 4:1, Sodium polymer.

*Yield:* 55.2%. Proton NMR showed the complete removal of the ethyl group (absence of ethyl peak). Measured intrinsic viscosity in 0.2 Molar sodium chloride solution (pH ∼7.3) at 25°C and calculated the viscosity molecular weight (31,200). Also measured GPC MALLS molecular weight (21,780), optical rotation (-52.8°), and amino acid analysis (Glu: 3.9 and Tyr: 1.1).

### Example 4. Synthesis of Poly(Glu, Ala, Tyr) 6:3:1, Sodium

*Polymerization*: 2.412g (0.012 mole) of γ-Ethyl-L-Glutamic acid NCA, 0.690g (0.006 mole) of L-Alanine NCA and 0.414g (0.002 mole) of L-Tyrosine NCA were dissolved in 0.1 liter of 1,4-dioxane to make a 0.2M solution. Added ∼0.5g of charcoal and filtered to yield a clear colorless solution. The filtered NCA solution was transferred to a 0.5 liter three neck RB flask equipped with mechanical mixing and a water bath at a temperature of 25 - 30°C. 0.5 ml of 1 N sodium methoxide (0.0005 moles) was placed in 5 ml of 1,4-dioxane. The sodium methoxide solution was added to the NCA solution in one portion with vigorous mixing. The polymerization solution was mixed for 2 hours and held at 25 - 30°C for 18 - 24 hours.

*Precipitation of Protected Polymer*: Slowly poured the polymer solution in ∼200ml of DI-water with vigorous mixing. Protected polymer precipitated, mixed for 30 minutes, filtered, and washed with water, 2x50ml. The protected polymer, unlike processes detailed in the prior art, is not dried. This is advantageous because it significantly decreases the amount of time required to synthesize the copolymer, and as a result, the invention provides a process that is more efficient and cost-effective.

*Deprotection of Ethyl group*: Transferred the wet polymer to a 100ml Erlenmeyer flask. Added 24ml of 1.5M ethanolic sodium hydroxide and mixed for 2 hours. Diluted the polymer solution with ∼50ml of DI-water and mixed for 5 minutes, which formed a clear solution.

*Dialysis*/*ultra-filtration and lyophilization (freeze drying)*: The poly(Glu, Ala, Tyr) 6:3:1, Sodium solution was dialyzed/ultra-filtered against running deionized water using ∼12K molecular weight cut off dialysis tubings/5K membrane to remove the oligomers and salts. The dialyzed/ultra-filtered solution was collected, filtered through a 0.2-micron filter and lyophilized (freeze dried) to get the solid poly(Glu, Ala, Tyr) 6:3:1, Sodium polymer.

*Yield:* 72.9%. Proton NMR showed the complete removal of the ethyl group (absence of ethyl peak). Measured intrinsic viscosity in 0.2 Molar sodium chloride solution (pH ∼7.3) at 25°C and calculated the viscosity molecular weight (41,400). Also measured GPC MALLS molecular weight (25,850), optical rotation (-98.9°), and amino acid analysis (Glu: 6, Ala: 3 and Tyr: 1).

### Example 5. Synthesis of poly(Glu, Ala, Tyr) 6:3:1, Sodium

*Polymerization*: 2.412g (0.012 mole) of γ-Ethyl-L-Glutamic acid NCA, 0.690g (0.006 mole) of L-Alanine NCA and 0.414g (0.002 mole) of L-Tyrosine NCA were dissolved in 0.1 liter of 1,4-dioxane to make a 0.2M solution. Added ∼0.5g of charcoal and filtered to yield a clear colorless solution. The filtered NCA solution was transferred to a 0.5 liter three neck RB flask equipped with mechanical mixing and a water bath at a temperature of 25 - 30°C. 0.5 ml of 1 N sodium methoxide (0.0005 moles) was placed in 5 ml of 1,4-dioxane. The sodium methoxide solution was added to the NCA solution in one portion with vigorous mixing. The polymerization solution was mixed for 2 hours and held at 25 - 30°C for 18 - 24 hours.

*Precipitation of Protected Polymer*: Slowly poured the polymer solution in ∼200ml of DI-water with vigorous mixing. Protected polymer precipitated, mixed for 30 minutes, filtered, and washed with water, 2x50ml. The protected polymer, unlike processes detailed in the prior art, is not dried. This is advantageous because it significantly decreases the amount of time required to synthesize the copolymer, and as a result, the invention provides a process that is more efficient and cost-effective.

*Deprotection of Ethyl group*: Transferred the wet polymer to a 100ml Erlenmeyer flask. Added 24ml of 1.5M ethanolic sodium hydroxide and mixed for 2 hours. Diluted the polymer solution with ∼50ml of DI-water and mixed for 5 minutes, which formed a clear solution.

*Dialysis*/*ultra-filtration and lyophilization (freeze drying)*: The poly(Glu, Ala, Tyr) 6:3:1, Sodium solution was dialyzed/ultra-filtered against running deionized water using ∼12K molecular weight cut off dialysis tubings/5K membrane to remove the oligomers and salts. The dialyzed/ultra-filtered solution was collected, filtered through a 0.2-micron filter and lyophilized (freeze dried) to get the solid poly(Glu, Ala, Tyr) 6:3:1, Sodium polymer.

*Yield:* 69.0%. Proton NMR showed the complete removal of the ethyl group (absence of ethyl peak). Measured intrinsic viscosity in 0.2 Molar sodium chloride solution (pH ∼7.3) at 25°C and calculated the viscosity molecular weight (38,200). Also measured GPC MALLS molecular weight (25,930), optical rotation (-96.7°), and amino acid analysis (Glu: 6, Ala: 3 and Tyr: 1).

### Example 6. Synthesis of Poly(Glu, Ala, Tyr) 6:3:1, Sodium

*Polymerization*: 24.12g (0.120 mole) of γ-Ethyl-L-Glutamic acid NCA, 6.90g (0.060 mole) of L-Alanine NCA and 4.14g (0.020 mole) of L-Tyrosine NCA were dissolved in 1 liter of 1,4-dioxane to make a 0.2M solution. Added ∼4.5g of charcoal and filtered to get yield a colorless solution. The filtered NCA solution was transferred to a 0.5 liter three neck RB flask equipped with mechanical mixing and a water bath at a temperature of 25 - 30°C. 5 ml of 1 N sodium methoxide (0.005 moles) was placed in 50 ml of 1,4-dioxane. The sodium methoxide solution was added to the NCA solution in one portion with vigorous mixing. The polymerization solution was mixed for 2 hours and held at 25 - 30°C for 18 - 24 hours.

*Precipitation of Protected Polymer*: Slowly poured the polymer solution in ∼2,000ml of DI-water with vigorous mixing. Protected polymer precipitated, mixed for 30 minutes, filtered, and washed with water, 2x250ml. The protected polymer, unlike processes detailed in the prior art, is not dried. This is advantageous because it significantly decreases the amount of time required to synthesize the copolymer, and as a result, the invention provides a process that is more efficient and cost-effective.

*Deprotection of Ethyl group*: Transferred the wet polymer to a 1,000ml Erlenmeyer flask. Added 240ml of 1.5M ethanolic sodium hydroxide and mixed for 2 hours. Diluted the polymer solution with ∼500ml of DI-water and mixed for 5 minutes, formed a clear solution.

*Dialysis*/*ultra-filtration and lyophilization (freeze drying)*: The poly(Glu, Ala, Tyr) 6:3:1, Sodium solution was dialyzed/ultra-filtered against running deionized water using ∼12K molecular weight cut off dialysis tubings/5K membrane to remove the oligomers and salts. The dialyzed/ultra-filtered solution was collected, filtered through a 0.2-micron filter and lyophilized (freeze dried) to get the solid poly(Glu, Ala, Tyr) 6:3:1, Sodium polymer.

*Yield:* 61.2%. Proton NMR showed the complete removal of the ethyl group (absence of ethyl peak). Measured intrinsic viscosity in 0.2 Molar sodium chloride solution (pH ∼7.3) at 25°C and calculated the viscosity molecular weight (38,300). Also measured GPC MALLS molecular weight (25,660), optical rotation (-98.7°), and amino acid analysis (Glu: 6, Ala: 3 and Tyr: 1).

## Claims

1. A method for the production of a polyamino acid random copolymer, the method comprising:
a. polymerizing a mixture comprising at least one N-carboxyanhydride comprising Formula (I) and at least one N-carboxyanhydride comprising Formula (II) in the presence of a polymerization initiator, wherein the molar ratio of N-carboxyanhydrides comprising Formula (I) and (II) to polymerization initiator is from 31:1 to 50:1, to form a random copolymer comprising a repeat unit comprising Formula (Ia) and a repeat unit comprising Formula (IIa); wherein:
the N-carboxyanhydride comprising Formula (I) corresponds to the following structure: 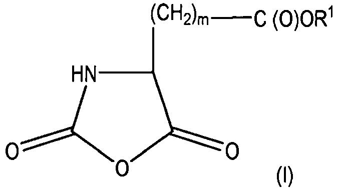
the N-carboxyanhydride comprising Formula (II) corresponds to the following structure: 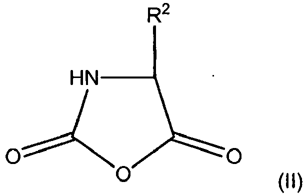
the repeat unit comprising Formula (Ia) corresponds to the following structure: 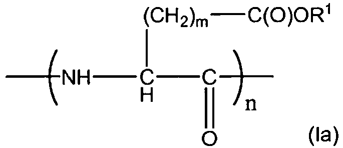
the repeat unit comprising Formula (IIa) corresponds to the following structure: 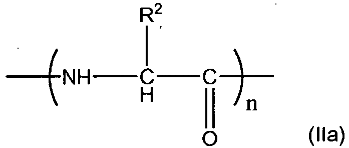
b. hydrolyzing R¹ from the repeat unit comprising Formula (Ia) in the presence of a base to form the polyamino acid random copolymer comprising repeat units corresponding to Formula (IIa) and (Ib), the repeat unit comprising Formula (Ib) corresponding to the following structure: 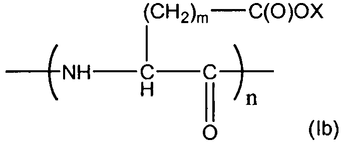 wherein:
R¹ is an alkyl;
R² is selected from the group consisting of {-}CH₂CH(CH₃)₂; {-}CH₃; {-}CH(CH₃)₂; {-}(CH₂)₃; {-}H; {-}CH₂OH; {-}CH₂C(O)NH₂; {-}(CH₂)₂C(O)NH₂; {-}(CH₂)₂SCH₃; {-}(CH₂)indolyl; {-}(CH₂)benzyl; {-}(CHCH₃)CH₂CH₃; {-}(CH)OHCH₃; {-}(CH₂)SH; {-}(CH₂)C₆H₄OH; {-}(CH₂)C₃N₂H₄; {-}(CH₂)₄NH₃⁺; and {-}(CH₂)₃NHC(N⁺H₂)NH₂;
X is hydrogen or an alkali metal
m is 1 or 2; and
n is an integer.

2. The method of claim 1, wherein the at least one N-carboxyanhydride comprising Formula (II) is at least one N-carboxyanhydride of tyrosine comprising Formula (II) and R² is {-}(CH₂)C₆H₄OH.

3. The method of either claim 1 or claim 2, wherein the polymerization initiator is a nucleophile.

4. The method of claim 3, wherein the nucleophile is selected from the group consisting of metal alkoxides and amines.

5. The method of claim 2, wherein the molar ratio of N-carboxanhydride comprising Formula I to N-carboxanhydride comprising Formula II is 1:1 to 5:1.

6. The method of either claim 1 or claim 2, wherein the polymerization reaction of step (a) is carried out in the presence of a solvent selected from the group consisting of dioxane, chloroform, dichloromethane, acetonitrile, and combinations thereof, and the reaction is conducted at a temperature ranging from 20° C to 40° C.

7. The method of either claim 1 or claim 2, wherein the polymer has a mass-average molecular weight of 5000 to 100,000, and n is 20 to 750; or the polymer has a mass-average molecular weight of 20,000 to 50,000, and n is 130 to 325.

8. The method of either claim 1 or claim 2, wherein the base of step (b) is selected from the group consisting of sodium hydroxide, potassium hydroxide, rubidium hydroxide, and combinations thereof; and the reaction of step (b) is carried out in the presence of an alcoholic solvent and at a temperature ranging from 15° C to 30° C.

9. The method of either claim 1 or claim 2, wherein m is 2, and R¹ is ethyl.

10. The method of either claim 1 or claim 2, wherein the polymerization reaction of step (a) is carried out in the presence of a solvent selected from the group consisting of dioxane, chloroform, dichloromethane, acetonitrile, and combinations thereof; and the reaction is conducted at a temperature ranging from 20° C to 40° C; the reaction of step (b) is carried out in the presence of an alcoholic solvent and at a temperature ranging from 15°C to 30° C.

11. The method of any of claim 1, claim 2, or claim 10, wherein the polymerization initiator is a nucleophile selected from the group consisting of metal alkoxides and amines; and the base of step (b) is selected from the group consisting of sodium hydroxide, potassium hydroxide, rubidium hydroxide, and combinations thereof.

12. The method of claim 11, wherein m is 2, and R¹ is ethyl.

13. The method of claim 12, wherein the polymer has a mass-average molecular weight of 5000 to 100,000 and n is from 20 to 750; or the polymer has a mass-average molecular weight of 20,000 to 50,000 and n is from 130 to 325.

14. The method of either claim 1 or claim 2, wherein the polyamino acid random copolymer comprises repeat units comprising at least three different amino acid residues; or the polyamino acid random copolymer comprises repeat units comprising at least four different amino acid residues.

15. The process of either claim 1 or claim 2, wherein the amino acids are selected from the group consisting of D optical isomers, L optical isomers, and a mixture of D and L optical isomers.

## Patentansprüche

1. Verfahren zur Herstellung eines Polyaminosäure-Randomcopolymers, wobei das Verfahren umfasst:
a. Polymerisieren eines Gemisches, umfassend wenigstens ein N-Carboxyanhydrid, das die Formel (I) umfasst, und wenigstens ein N-Carboxyanhydrid, das die Formel (II) umfasst, in Anwesenheit eines Polymerisationsinitiators, wobei das molare Verhältnis der N-Carboxyanhydride, die die Formel (I) und (II) umfassen, zum Polymerisationsinitiator von 31:1 bis 50:1 reicht, um ein Randomcopolymer zu bilden, das eine Wiederholungseinheit mit der Formel (la) und eine Wiederholungseinheit mit der Formel (IIa) umfasst,
wobei:
das N-Carboxyanhydrid, das die Formel (I) umfasst, folgender Struktur entspricht: 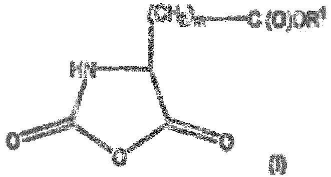
das N-Carboxyanhydrid, das die Formel (II) umfasst, folgender Struktur entspricht: 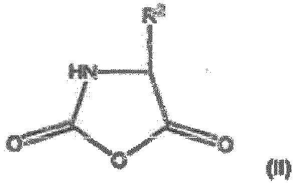
die Wiederholungseinheit, die die Formel (Ia) umfasst, folgender Struktur entspricht: 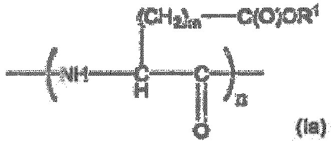
die Wiederholungseinheit, die die Formel (IIa) umfasst, folgender Struktur entspricht: 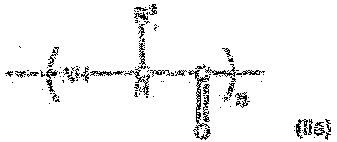
b. Hydrolysieren von R¹ aus der Wiederholungseinheit, die die Formel (la) umfasst, in Anwesenheit einer Base, um das Polyaminosäure-Randomcopolymer, das Wiederholungseinheiten entsprechend Formel (IIa) und (Ib) umfasst, zu bilden, wobei die Wiederholungseinheit, die die Formel (Ib) umfasst, folgender Struktur entspricht: 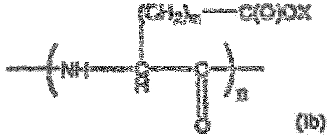 wobei:
R¹ ein Alkyl ist,
R² ausgewählt ist aus der Gruppe, bestehend aus {-}CH₂CH(CH₃)₂, {-}CH₃, {-}CH(CH₃)₂, {-}(CH₂)₃, {-}H, {-}CH₂OH, {-}CH₂C(O)NH₂, {-}(CH₂)₂C(O)NH₂, {-}(CH₂)SCH₃, {-}(CH₂)indolyl, {-}(CH₂)benzyl, {-}(CHCH₃)CH₂CH₃, {-}(CH)OHCH₃, {-}(CH₂)SH, {-}(CH₂)C₆H₄OH, {-}(CH₂)C₃N₂H₄, {-}(CH₂)₄NH₃⁺, und {-}(CH₂)₃NHC(N⁺H₂)NH₂,
X Wasserstoff oder ein Alkalimetall ist,
m 1 oder 2 ist, und
n eine ganze Zahl ist.

2. Verfahren nach Anspruch 1, wobei das mindestens eine N-Carboxyanhydrid, das die Formel (II) umfasst, wenigstens ein N-Carboxyanhydrid von Tyrosin ist, das die Formel (II) umfasst, und wobei R² {-}(CH₂)C₆H₄OH ist.

3. Verfahren nach Anspruch 1 oder Anspruch 2, wobei der Polymerisationsinitiator ein Nukleophil ist.

4. Verfahren nach Anspruch 3, wobei das Nukleophil ausgewählt ist aus der Gruppe, bestehend aus Metallalkoxiden und Aminen.

5. Verfahren nach Anspruch 2, wobei das molare Verhältnis von N-Carboxyanhydrid, das die Formel I umfasst, zu N-Carboxyanhydrid, dass die Formel II umfasst, 1:1 bis 5:1 ist.

6. Verfahren nach Anspruch 1 oder Anspruch 2, wobei die Polymerisationsreaktion von Schritt (a) in Anwesenheit eines Lösemittels ausgeführt wird, das ausgewählt ist aus der Gruppe, bestehend aus Dioxan, Chloroform, Dichlormethan, Acetonitril und Kombinationen daraus, und wobei die Reaktion bei einer Temperatur im Bereich von 20 °C bis 40 °C ausgeführt wird.

7. Verfahren nach Anspruch 1 oder Anspruch 2, wobei das Polymer ein massenmittleres Molekulargewicht von 5.000 bis 100.000 aufweist und n 20 bis 750 ist, oder wobei das Polymer ein massenmittleres Molekulargewicht von 20.000 bis 50.000 aufweist und n 130 bis 325 ist.

8. Verfahren nach Anspruch 1 oder Anspruch 2, wobei die Base aus Schritt (b) ausgewählt ist aus der Gruppe, bestehend aus Natriumhydroxid, Kaliumhydroxid, Rubidiumhydroxid und Kombinationen daraus, und wobei die Reaktion nach Schritt (b) in Anwesenheit eines alkoholischen Lösemittels und bei einer Temperatur im Bereich von 15 °C bis 30 °C durchgeführt wird.

9. Verfahren nach Anspruch 1 oder Anspruch 2 wobei m 2 ist und R¹ Ethyl ist.

10. Verfahren nach Anspruch 1 oder Anspruch 2, wobei die Polymerisationsreaktion nach Schritt (a) in Anwesenheit eines Lösemittels durchgeführt wird, das ausgewählt ist aus der Gruppe, bestehend aus Dioxan, Chloroform, Dichlormethan, Acetonitril und Kombinationen daraus, und wobei die Reaktion bei einer Temperatur im Bereich von 20 °C bis 40 °C ausgeführt wird, und wobei die Reaktion nach Schritt (b) in Anwesenheit eines alkoholischen Lösemittels und bei einer Temperatur im Bereich von 15 °C bis 30 °C ausgeführt wird.

11. Verfahren nach einem der Ansprüche 1, 2 oder 10, wobei der Polymerisationsinitiator ein Nukleophil ist, das ausgewählt ist aus der Gruppe, bestehend aus Metallalkoxiden und Aminen, und wobei die Base aus Schritt (b) ausgewählt ist aus der Gruppe, bestehend aus Natriumhydroxid, Kaliumhydroxid, Rubidiumhydroxid und Kombinationen daraus.

12. Verfahren nach Anspruch 11, wobei m 2 ist und R¹ Ethyl ist.

13. Verfahren nach Anspruch 12, wobei das Polymer ein massenmittleres Molekulargewicht von 5.000 bis 100.000 aufweist und n 20 bis 750 ist, oder wobei das Polymer ein massenmittleres Molekulargewicht von 20.000 bis 50.000 aufweist und n 130 bis 325 ist.

14. Verfahren nach Anspruch 1 oder Anspruch 2, wobei das Polyaminosäure-Randomcopolymer Wiederholungseinheiten umfasst, die wenigstens drei unterschiedliche Aminosäurereste umfassen, oder wobei das Polyaminosäure-Randomcopolymer Wiederholungseinheiten umfasst, die wenigstens vier unterschiedliche Aminosäurereste umfassen.

15. Verfahren nach Anspruch 1 oder Anspruch 2, wobei die Aminosäuren ausgewählt sind aus der Gruppe, bestehend aus D-optischen Isomeren, L-optischen Isomeren und einem Gemisch aus D- und L-optischen Isomeren.

## Revendications

1. Procédé pour la production d'un copolymère aléatoire de polyaminoacide, le procédé comprenant :
a. la polymérisation d'un mélange comprenant au moins un N-carboxyanhydride comprenant la Formule (I) et au moins un N-carboxyanhydride comprenant la Formule (II) en présence d'un initiateur de polymérisation, dans lequel le rapport molaire des N-carboxyanhydrides comprenant les Formules (I) et (II) sur l'initiateur de polymérisation va de 31:1 à 50:1, de manière à former un copolymère aléatoire comprenant une unité de répétition comprenant la formule (Ia) et une unité de répétition comprenant la formule (IIa),
dans lequel :
le N-carboxyanhydride comprenant la Formule (I) correspond à la structure qui suit : 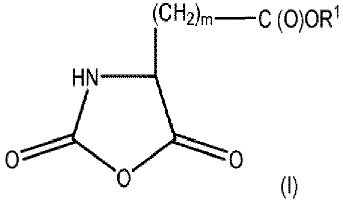
le N-carboxyanhydride comprenant la Formule (II) correspond à la structure qui suit : 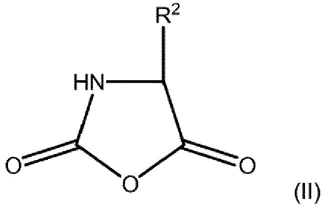
l'unité de répétition comprenant la Formule (Ia) correspond à la structure qui suit : 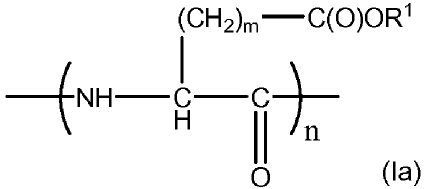
l'unité de répétition comprenant la Formule (IIa) correspond à la structure qui suit : 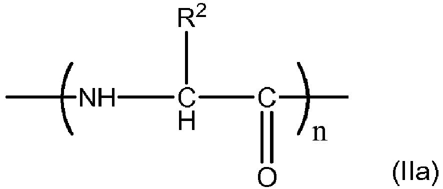
b. l'hydrolyse de R¹ de l'unité de répétition constituée selon la Formule (Ia) en présence d'une base de manière à former le copolymère aléatoire de polyaminoacide comprenant des unités de répétition correspondant aux Formules (IIa) et (Ib), l'unité de répétition comprenant la Formule (Ib) correspondant à la structure qui suit : 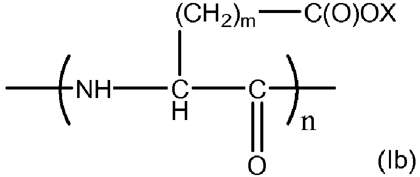 où :
R¹ est un alkyle ;
R² est choisi parmi le groupe constitué de {-}CH₂CH(CH₃)₂ ; {-}CH₃ ; {-}CH(CH₃)₂ ; {-}(CH₂)₃; {-}H ; {-}CH₂OH ; {-}CH₂C(O)NH₂ ; {-}(CH₂)₂C(O)NH₂ ; {-}(CH₂)₂SCH₃ ; {-}(CH₂)indolyle ; {-}(CH₂)benzyle ; {-}(CHCH₃)CH₂CH₃ ; {-}(CH)OHCH₃ ; {-}(CH₂)SH ; {-}(CH₂)C₆H₄OH ; {-}(CH₂)C₃N₂H₄ ; {-}(CH₂)₄NH₃⁺ ; et {-}(CH₂)3NHC(N⁺H₂)NH₂ ;
X est hydrogène ou un métal alcalin ;
m est 1 ou 2 ; et
n est un entier.

2. Procédé selon la revendication 1, dans lequel l'au moins un N-carboxyanhydride comprenant la Formule (II) est au moins un N-carboxyanhydride de tyrosine comprenant la Formule (II) et R² est {-}(CH₂)C₆H₄OH.

3. Procédé selon la revendication 1 ou la revendication 2, dans lequel l'initiateur de polymérisation est un nucléophile.

4. Procédé selon la revendication 3, dans lequel le nucléophile est choisi parmi le groupe constitué des alcoxydes et amines métalliques.

5. Procédé selon la revendication 2, dans lequel le rapport molaire du N-carboxyanhydride comprenant la Formule (I) sur le N-carboxyanhydride comprenant la Formule (II) va de 1:1 à 5:1.

6. Procédé selon la revendication 1 ou la revendication 2, dans lequel la réaction de polymérisation de l'étape (a) est mise en oeuvre en présence d'un solvant choisi parmi le groupe constitué de dioxane, chloroforme, dichlorométhane, acétonitrile et des combinaisons afférentes, et la réaction se déroule à une température qui s'inscrit dans la plage qui va de 20°C à 40°C.

7. Procédé selon la revendication 1 ou la revendication 2, dans lequel le polymère présente un poids moléculaire moyen en masse de 5 000 à 100 000, et n va de 20 à 750 ; ou le polymère présente un poids moléculaire moyen en masse de 20 000 à 50 000, et n va de 130 à 325.

8. Procédé selon la revendication 1 ou la revendication 2, dans lequel la base de l'étape (b) est choisie parmi le groupe constitué de hydroxyde de sodium, hydroxyde de potassium, hydroxyde de rubidium, et des combinaisons afférentes ; et la réaction de l'étape (b) est mise en oeuvre en présence d'un solvant alcoolique et à une température qui s'inscrit dans la plage qui va de 15°C à 30°C.

9. Procédé selon la revendication 1 ou la revendication 2, dans lequel m vaut 2, et R¹ est éthyle.

10. Procédé selon la revendication 1 ou la revendication 2, dans lequel la réaction de polymérisation de l'étape (a) est mise en oeuvre en présence d'un solvant choisi parmi le groupe constitué de dioxane, chloroforme, dichlorométhane, acétonitrile et des combinaisons afférentes ; et la réaction se déroule à une température qui s'inscrit dans la plage qui va de 20°C à 40°C ; la réaction de l'étape (b) est mise en oeuvre en présence d'un solvant alcoolique et à une température qui s'inscrit dans la plage qui va de 15°C à 30°C.

11. Procédé selon l'une quelconque des revendications 1, 2 ou 10, dans lequel l'initiateur de polymérisation est un nucléophile choisi parmi le groupe constitué des alcoxydes et amines métalliques ; et la base de l'étape (b) est choisie parmi le groupe constitué d'hydroxyde de sodium, hydroxyde de potassium, hydroxyde de rubidium et des combinaisons afférentes.

12. Procédé selon la revendication 11, dans lequel m vaut 2, et R¹ est éthyle.

13. Procédé selon la revendication 12, dans lequel le polymère présente un poids moléculaire moyen en masse de 5 000 à 100 000, et n va de 20 à 750 ; ou le polymère présente un poids moléculaire moyen en masse de 20 000 à 50 000, et n va de 130 à 325.

14. Procédé selon la revendication 1 ou la revendication 2, dans lequel le copolymère aléatoire de polyaminoacide comprend des unités de répétition comprenant au moins trois résidus d'acides aminés différents ; ou le copolymère aléatoire de polyaminoacide comprend des unités de répétition comprenant au moins quatre résidus d'acides aminés différents.

15. Procédé selon la revendication 1 ou la revendication 2, dans lequel les acides aminés sont choisis parmi le groupe constitué des isomères optiques D, des isomères optiques L et un mélange d'isomères optiques D et L.
